# EUROPÄISCHE PATENTSCHRIFT

(11) **EP 1 946 967 B1**
(45) Veröffentlichungstag und Bekanntmachung des Hinweises auf die Patenterteilung: **26.05.2010**
(21) Anmeldenummer: 07024267.2
(22) Anmeldetag: 14.12.2007
(51) Int. Cl.: B60Q 3/02

(54) **Steuerung der Innenraumbeleuchtung eines Kraftfahrzeugs**
Control of the interior lighting of a vehicle
Commande de l'éclairage intérieur d'un véhicule

(30) Priorität: 17.01.2007 DE 102007002563
(43) Veröffentlichungstag der Anmeldung: 23.07.2008
(73) Patentinhaber: AUDI AG, 85045 Ingolstadt (DE)
(72) Erfinder: Berlitz, Stephan, 86529 Schrobenhausen (DE); Schmitz, Christoph, 93326 Abensberg (DE)
(74) Vertreter: Thielmann, Frank

(56) Entgegenhaltungen:
- DE-A1- 10 309 039
- DE-A1-102005 022 912
- DE-A1-102005 036 941
- JP-A- 2003 279 363
- US-B- 6 199 001

## Beschreibung

Die Erfindung betrifft ein Kraftfahrzeug umfassend eine oder mehrere Leuchteinrichtungen zur Innenraumbeleuchtung und ein diese steuerndes Steuergerät, sowie ein Navigationssystem zur Ermittlung aktueller und/oder prädikativer Streckendaten.

In bekannten Kraftfahrzeugen sind üblicherweise eine Vielzahl von Leuchteinrichtungen integriert, die der Innenraumbeleuchtung dienen. Hierunter sind sowohl Innenleuchten, die beispielsweise dann angehen, wenn eine Kraftfahrzeugtür geöffnet wird, um den Raum relativ hell auszuleuchten, oder Leselichter zu verstehen, wie auch sogenannte Ambientenleuchten, die während der Fahrt eine bestimmte Grundausleuchtung erzielen, um ein bestimmtes beleuchtungstechnisches Raumambiente im Fahrzeug zu erzeugen. Üblicherweise kann das Innen- und Leselicht von den Insassen, je nach Bedarf, ein- und ausgeschaltet werden. Manche Fahrzeuge bieten darüber hinaus eine Dimmfunktion für das Innen- und Leselicht an. Sind Ambienteleuchten vorgesehen, so sind die Helligkeitswerte der Ambientenbeleuchtung üblicherweise fest vorgegeben, sie sind vom Insassen nicht veränderbar.

Die manuelle Veränderbarkeit verschiedener Leuchteinrichtungen lässt zwar eine gewisse Flexibilität zu, bringt jedoch auch Probleme mit sich. Denn es kann mitunter zu einer Beeinträchtigung des Fahrers kommen, wenn eine oder mehrere Leuchteinrichtungen zu hell leuchten, beispielsweise bei einer Fahrt in der Dämmerung oder bei Dunkelheit, wobei in solchen Fällen der verträgliche Helligkeitsgrad sehr häufig abhängig von der Umgebung ist, also davon, ob man in der Stadt fährt, wo die Umgebungshelligkeit grundsätzlich höher ist, auf einer Landstraße oder einer Autobahn. Entsprechendes gilt für in ihrer Helligkeit nicht veränderbare Leuchteinrichtungen wie beispielsweise das Ambientenlicht.

DE 10 2005 022 912 A1 offenbart eine Innenraumbeleuchtung, deren Helligkeit und Farbe in Abhängigkeit von der Fahrsituation eingestellt werden. Die Fahrsituation wird von einem AFS-Scheinwerfer-System anhand eines GPS-Signals ermittelt und im Bordnetz zur Verfügung gestellt.

US 6,199,001 B1 offenbart eine Steuervorrichtung, welche die Qualität der gespeicherten Streckendaten überprüft. Die Steuerung von verschiedenen Systemen (z.B. von einer Automatikgetriebe) erfolgt in Abhängigkeit von der ermittelten Qualität dieser Daten.

Der Erfindung liegt das Problem zugrunde, ein Kraftfahrzeug anzugeben, bei dem eine situationsabhängige, insbesondere ortsabhängige automatische Veränderbarkeit der Helligkeit einer oder mehrerer Leuchteinrichtungen möglich ist.

Zur Lösung dieses Problems ist ein Kraftfahrzeug gemäß Anspruch 1vorgesehen, wobei das Steuergerät mit dem Navigationssystem kommuniziert und zur Steuerung der einen oder mehreren Leuchteinrichtungen in Abhängigkeit von vom Navigationssystem übertragenen aktuellen und/oder prädikativen Streckendaten ausgebildet ist.

Beim erfindungsgemäßen Kraftfahrzeug arbeitet die Steuerungseinrichtung der Leuchteinrichtungen mit dem Navigationssystem zusammen. Sehr viele Kraftfahrzeuge verfügen von Haus aus über ein Navigationssystem, das der Ermittlung der Ist-Position und daraus abgeleitet aktueller Streckendaten oder prädikativer Streckendaten, also von Informationen, die die Fahrstrecke vorausschauend beschreiben, dient. Die aktuellen bzw. prädikativen Streckendaten enthalten u. a. auch Informationen bezüglich der befahrenen Straße, also des Straßentyps (z. B. einer Stadtstraße, einer Landstraße oder einer Autobahn). Solche Informationen werden in Verbindung mit den ermittelten Ist-Positionsdaten aus geografischen Daten, die auch auf einem Datenträger abgelegt sind, abgeleitet. Diese geografischen Daten sind Landkartendaten, die sehr genau ortsaufgelöste Informationen enthalten. Das heißt, die aktuellen/prädikativen Streckendaten enthalten eine Information dahingehend, wo sich das Kraftfahrzeug befindet, und welcher Straßentyp befahren wird.

Das Leuchtensteuergerät empfängt nun diese aktuellen/prädikativen Streckendaten mit sämtlichen Informationsinhalten. Das Steuergerät kann also erkennen, wo bzw. auf welcher Straße sich das Fahrzeug befindet. In Abhängigkeit davon wird nun erfindungsgemäß die Steuerung der Leuchteinrichtungen automatisch vorgenommen. Befindet sich das Fahrzeug beispielsweise auf einer Autobahn, so wird beispielsweise die Ambientenbeleuchtung etwas zurückgenommen, damit der Innenraum nicht allzu hell ausgeleuchtet ist und der Fahrer hierdurch nicht gestört wird und sich auf die Fahrt bzw. Fahrbahn konzentrieren kann, was insbesondere bei Fahrten in der Dämmerung oder Dunkelheit mit hoher Geschwindigkeit von Vorteil ist. Befindet sich das Fahrzeug beispielsweise auf Landstraßen, wo Geschwindigkeitsbegrenzungen gegeben sind, so kann die Ambientenbeleuchtung etwas angehoben werden. Eine weitere Helligkeitsstufe ist beispielsweise dann gegeben, wenn das Fahrzeug in der Stadt fährt, wo von Haus aus eine relativ hohe Umgebungshelligkeit gegeben ist, die bedingt, dass die Ambientenbeleuchtung, um überhaupt das gewünschte Ambiente erzeugen zu können, etwas heller leuchtet. In entsprechender Weise kann natürlich auch beispielsweise eine Leselampe angesteuert werden.

Insgesamt lässt die erfindungsgemäße Steuerung der Leuchtenhelligkeit in Abhängigkeit der aktuellen/prädikativen Streckendaten, mithin also der Positions- oder Fahrbahninformation eine situationsabhängige Helligkeitssteuerung zu, die eine der tatsächlichen Situation angepasste Innenraumbeleuchtung ermöglicht.

Erfindungsgemäß ist es zweckmäßig, wenn das Navigationssystem oder das Steuergerät zur qualitativen Überprüfung der aktuellen und/oder prädikativen Streckendaten ausgebildet ist. Hierüber soll quasi nach Art einer Plausibilitätsprüfung ein gewisser Mindestqualitätsstandard der ermittelten Streckendaten, die der nachfolgenden Beleuchtungssteuerung zugrunde gelegt werden, sichergestellt werden. Beispielsweise kann das auf dem Datenträger abgelegte "Kartenmaterial", also die Daten, aus denen Teildaten der gesamten Streckendaten wie insbesondere die Art der befahrenen Straße etc. ermittelt werden, nicht mehr aktuell, also veraltert sein. Dies kann dazu führen, dass eine befahrene Straße, da neu gebaut, datentechnisch überhaupt nicht erfasst ist, oder dass beispielsweise bestimmte Geschwindigkeitsbegrenzungen auf der befahrenen Straße neu eingeführt wurden oder nicht mehr existieren, die zu einem entsprechenden Fahrverhalten führen, etc. Die Qualitätsprüfung lässt nun zu, eine Aussage bezüglich der Datenqualität treffen zu können, wobei die nachfolgende Leuchtensteuerung die ermittelte Datenqualität berücksichtigt bzw. in Abhängigkeit derselben erfolgt.

Werden qualitativ ungenügende Streckendaten ermittelt, so ist die nachfolgende Leuchtensteuerung nicht mehr in Abhängigkeit der gegebenen Streckendaten durchzuführen. In einem solchen Fall erfolgt die Steuerung der Leuchteinrichtungen zweckmäßigerweise gemäß fest vorgegebener Steuerparameter. Beispielsweise wird in solchen Fällen ein Steuerparametersat für eine Landstraßenfahrt verwendet, also ein Steuerparametersatz, der quasi eine "Mittenlösung" zwischen einer Stadtfahrt und einer Autobahnfahrt darstellt. Alternativ hierzu ist es denkbar, den in einem solchen Fall zu wählenden Steuerparametersatz in Abhängigkeit eines Betriebsparameters eines Kraftfahrzeugs zu wählen, wobei bevorzugter Auswahl-Betriebsparameter die Ist-Geschwindigkeit des Kraftfahrzeugs ist. Über diese Ist-Geschwindigkeit wird dann ein entsprechender Steuerparametersatz ausgewählt, da über die gefahrene Ist-Geschwindigkeit zumindest grob ein Rückschluss auf die befahrene Straße vorgenommen werden kann. Fährt das Fahrzeug beispielsweise weniger 80 km/h, so ist von einer Stadtfahrt auszugehen, es wird dann der einer Stadtstraße zugeordnete Parametersatz verwendet. Fährt das Fahrzeug mit einer Geschwindigkeit von beispielsweise 80 - 110 km/h, so ist von einer Landstraßenfahrt auszugehen, während bei Geschwindigkeiten oberhalb von 110 km/h von einer Autobahnfahrt ausgegangen werden kann und die entsprechenden, diesen Straßentypen zugeordneten Steuerparametersätze der Leuchtensteuerung zugrunde gelegt werden. In jedem Fall, also bei Verwendung nur eines fest vorgegebenen Parametersatzes, oder bei der Möglichkeit einer Parametersatzauswahl, ist der jeweilige Vorgang stets unabhängig von den übertragenen, jedoch als qualitativ ungenügend gekennzeichneten Streckendaten.

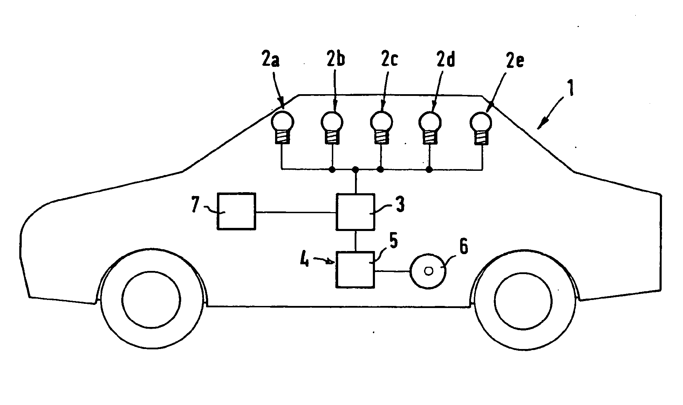

Weitere Vorteile, Merkmale und Einzelheiten der Erfindung ergeben sich aus dem im folgenden beschriebenen Ausführungsbeispiel sowie anhand der Zeichnung.

In dieser ist in Form einer Prinzipdarstellung ein erfindungsgemäßes Kraftfahrzeug 1 gezeigt, wobei hier lediglich die erfindungsgemäß relevanten Komponenten dargestellt sind. Im Innenraum des Kraftfahrzeugs 1 verteilt angeordnet sind eine Vielzahl von Leuchteinrichtungen 2a, 2b, 2c, 2d und 2e, wobei natürlich auch deutlich mehr separater Leuchteinrichtungen vorgesehen sein können. Es sei angenommen, dass es sich bei der Leuchteinrichtung 2a um eine Innenraumbeleuchtung, bei der Leuchteinrichtung 2b um eine Leseleuchte und bei den Leuchteinrichtungen 2c, 2d und 2e um separate Leuchten für eine Ambientenbeleuchtung handelt.

Alle Leuchteinrichtungen 2a - 2e werden über ein gemeinsames Steuergerät 3 separat gesteuert. Selbstverständlich nicht näher gezeigt sind die jeweiligen Kommunikations- und Leistungsversorgungsverbindungen etc.

Erfindungsgemäß kommuniziert nun das Steuergerät 3 mit einem Navigationssystem 4, umfassend ein Steuergerät 5 und einen zugeordneten Datenspeicher 6. Bekanntlich kommuniziert ein Navigationssystem 4 mit wenigstens drei geostationären Satelliten, um eine Ortspositionsbestimmung vorzunehmen. Das Navigationssystem 4 ermittelt nun anhand der Positionsinformation aktuelle oder prädikative Streckendaten der befahrenen Fahrbahn, wozu entsprechende Streckeninformationen auf dem Datenspeicher 6, z. B. eine Daten-CD abgelegt sind, üblicherweise in Form eines digitalisierten Landkartenmaterials. Anhand der ermittelten Positionsinformation können anhand der abgelegten Kartendaten verschiedene Streckeninformationen ermittelt werden, wie beispielsweise die Straßenklasse, also ob eine Autobahn, eine Landstraße, eine Stadtstraße oder ein Feldweg etc. befahren werden, die geografische Höhe, konkrete Ortskoordinaten, Fahrspuren etc., wie gegebenenfalls auch die Geschwindigkeit, die aus der zeitlichen Veränderung der Positionsinformation bzw. Koordinateninformation ermittelt werden kann. Die konkrete datentechnische Struktur der vom Navigationssystem 4 ermittelten Streckendaten umfassend Positionsdaten und sonstige Informationsdaten betreffend die befahrene Strecke etc. sowie entsprechende zusätzliche Daten, die der Qualitäts- oder Plausibilitätsprüfung dienen etc., ist dem Fachmann hinlänglich bekannt und bedarf keiner näheren Erläuterung.

Diese Streckendaten, also die Ist-Positionsdaten sowie die sonstigen oben genannten Informationsdaten wie Straßenklasse, Fahrspur etc., werden nun an das Steuergerät 3 übertragen. Dieses kann nun erkennen, ob sich das Fahrzeug auf einer Autobahn, einer Landstraße, einer Stadtstraße etc. befindet. In Abhängigkeit davon wählt nun das Steuergerät 3 den oder diejenigen Steuerparameter aus, die zur orts- bzw. situationsbezogenen Ansteuerung der einzelnen Leuchteinrichtungen 2a - 2e dienen, sofern diese im Moment betrieben werden. Insbesondere betrifft dies die Ansteuerung der Ambientenbeleuchtung mit den Leuchteinrichtungen 2c - 2e, die üblicherweise stets betrieben sind. Je nachdem, ob nun eine Autobahnfahrt oder eine Stadtfahrt erkannt wird, wird die Steuerung der Leuchteinrichtungen 2c - 2e automatisch der Ist-Situation angepasst eingestellt. Beispielsweise wird die Ambientenbeleuchtung heller angesteuert, das heißt, die Leuchten 2c - 2e leuchten stärker, wenn eine Stadtfahrt erkannt wird, da die bei Dämmerung oder in der Dunkelheit gegebene Umgebungshelligkeit deutlich größer ist als bei einer Überlandfahrt und es zur Erzeugung eines gewünschten Raumambientes erforderlich ist, die Umgebungshelligkeit über die Ambientenbeleuchtung quasi zu "übertönen". Hingegen wird die Ambientenbeleuchtung zurückgenommen bzw. gedimmt, wenn der Übergang zu einer Landstraßen- oder Autobahnfahrt erkannt wird, um keine Beeinträchtigung des Fahrers infolge zu hoher Innenraumhelligkeit zuzulassen.

Das Navigationssystem 4 bzw. dessen Steuergerät 5 oder das Steuergerät 3 sind des Weiteren zur Qualitätsprüfung der übertragenen Streckendaten ausgebildet. Hierüber kann ermittelt werden, ob die ermittelten Streckendaten ein qualitatives hinreichendes Maß aufweisen, mithin also verlässlich und hinreichend genau sind, oder ob die Gefahr besteht, dass sie fehlerbehaftet sind. Hierzu können unterschiedliche Teildaten der Streckendaten dienen. Beispielsweise können die Streckendaten ein "Refresh-Bit" enthalten, das zur Plausibilisierung mit seitens des Steuergeräts 3 bereits zuvor empfangenen Daten dient. Das heißt, es erfolgt beispielsweise ein Vergleich der gerade empfangenen Daten mit zeitlich zuvor empfangenen Daten, um zu ermitteln, ob die jüngsten Daten plausibel mit den älteren Daten sind. Die Streckendaten können weiterhin ein "Positions-Bit" umfassen, das ein Qualitätskriterium für die Ist-Positionsbestimmung darstellt. Das heißt, die Ist-Position wurde beispielsweise vom Steuergerät 5 vorab überprüft, beispielsweise ebenfalls anhand eines Plausibilitätsvergleichs mit zuvor ermittelten Ist-Positionsdaten. Ferner können die Streckendaten ein "Straßenklasse-Bit" umfassen, das die Straßensituation identifiziert, also angibt, ob es sich um eine städtische Straße, eine Landstraße, eine Autobahn, einen Feldweg, einen Tunnel etc. handelt. Weiterhin kann ein "Ortschafts-Bit" enthalten sein, das angibt, ob das Fahrzeug innerorts oder außerorts fährt. Hierüber können beispielsweise ohne weiteres innerstädtische Schnellstraßen (Stadtautobahnen) von außerstädtischen Autobahnen oder Landstraßen unterschieden werden. Schließlich kann ein "Kartenqualitäts-Bit" enthalten sein, das die Qualität des verwendeten Kartenmaterials, also der verwendeten Kartendaten angibt, beispielsweise deren Alter beschreibt.

Das Steuergerät 3 ist nun imstande, diese einzelnen Bits in ihren Informationsgehalt zu erfassen und auszuwerten bzw. diese zu verarbeiten und der weiteren Steuerung zugrunde zu legen. Gibt beispielsweise das "Kartenqualitäts-Bit" an, dass das Kartenmaterial relativ alt ist, kann das Steuergerät weitere der oben genannten Bits berücksichtigen und überprüfen, beispielsweise das "Positions-Bit" oder das "Ortschafts-Bit", um darüber Rückschlüsse auf die Qualität der übertragenen Streckendaten zu gewinnen. Denkbar ist es auch, hierfür eine Geschwindigkeitsinformation heranzuziehen, die beispielsweise über eine Erfassungseinrichtung 7 bzw. an das Steuergerät 3 übertragen wird. Ergibt die Geschwindigkeitsinformation, dass das Fahrzeug z. B. 150 km/h fährt, so kann davon ausgegangen werden, dass eine Autobahn befahren wird. Stimmen dann auch beispielsweise der Informationsgehalt des "Ortschafts-Bits" sowie des "Straßenklassen-Bits" damit plausibel überein, kann von einer Richtigkeit der übertragenen Streckendaten ausgegangen werden. Sodann kann gestützt hierauf die entsprechende Leuchtensteuerung erfolgen.

Ergibt sich aus der Qualitätsprüfung der Streckendaten, dass diese nicht hinreichend genau sind, qualitativ also nicht geeignet sind und beispielsweise einen bestimmten Vergleichswert unterschreiten, so wird dies seitens der Steuerungseinrichtung 3 erkannt. Dies kann nun beispielsweise grundsätzlich für die nachfolgende Steuerung fest vorgegebene Steuerparameter verwenden, die beispielsweise einer Landstraßenfahrt zugeordnet sind. Die Ambientenbeleuchtung mit den Leuchteinrichtungen 2c - 2e wird also so angesteuert, als wenn eine Landstraße befahren wird, unabhängig davon, ob nun tatsächlich eine Landstraßenfahrt gegeben ist. Denkbar ist es aber auch, bei der Auswahl der Steuerparameter die Geschwindigkeitsinformation, geliefert über die Erfassungseinrichtung 7, zu berücksichtigen. Ergibt sich beispielsweise eine erfasste Ist-Geschwindigkeit <70 km/h, so ist von einer Stadtfahrt auszugehen, es werden dann die entsprechenden, einer Stadtstraße zugeordneten Steuerparameter für die nachfolgende Leuchtensteuerung angewendet. Wird eine Ist-Geschwindigkeit aus dem Bereich zwischen 70 km/h - 120 km/h ermittelt, kann auf eine Landstraßenfahrt geschlossen werden, es werden dann die der Landstraße zugeordneten Steuerparameter eingeladen und zur Steuerung verwendet. Ist die Ist-Geschwindigkeit >120 km/h, ist von einer Autobahnfahrt mit den entsprechenden Steuerparametern auszugehen.

## Patentansprüche

1. Kraftfahrzeug umfassend eine oder mehrere Leuchteinrichtungen zur Innenraumbeleuchtung und ein diese steuerndes Steuergerät, sowie ein Navigationssystem zur Ermittlung aktueller und/oder prädikativer Streckendaten, wobei das Steuergerät (3) mit dem Navigationssystem (4) kommuniziert und zur Steuerung der einen oder mehreren Leuchteinrichtungen (2a, ..., 2e) in Abhängigkeit von vom Navigationssystem (4) übertragenen aktuellen und/oder prädikativen Streckendaten ausgebildet ist,
**dadurch gekennzeichnet,**
**dass** das Navigationssystem (4) oder das Steuergerät (3) zur qualitativen Überprüfung der aktuellen und/oder prädikativen Streckendaten ausgebildet ist und bei Ermittlung qualitativ ungenügender Streckendaten über das Steuergerät (3) ein oder mehrere Leuchteinrichtungen (2a, .., 2e) gemäß fest vorgegebener oder in Abhängigkeit eines Betriebsparameters des Kraftfahrzeugs (1) wählbarer Steuerparameter ansteuerbar sind.

2. Kraftfahrzeug nach Anspruch 1,
**dadurch gekennzeichnet,**
**dass** die fest vorgegebenen oder wählbaren vorbestimmten Steuerparameter einem bestimmten Fahrbahntyp zugeordnet sind.

3. Kraftfahrzeug nach Anspruch 2,
**dadurch gekennzeichnet,**
**dass** der Betriebsparameter des Kraftfahrzeugs (1) die Ist-Geschwindigkeit ist.

## Claims

1. Motor vehicle comprising one or more lighting devices for lighting the interior, and a control device which controls the lighting of the interior, as well as a navigation system for identifying current and/or predictive route data, wherein the control device (3) communicates with the navigation system (4) and is designed to control the one or more lighting devices (2a, ..., 2e) as a function of current and/or predictive route data transmitted by the navigation system (4),
**characterized**
**in that** the navigation system (4) or the control device (3) is designed to perform qualitative checking of the current and/or predictive route data and, when qualitatively insufficient route data is obtained one or more lighting devices (2a, ..., 2e) can be actuated by means of the control device (3) according to control parameters which are permanently predefined or can be selected as a function of an operating parameter of the motor vehicle (1).

2. Motor vehicle according to Claim 1,
**characterized**
**in that** the permanently predefined or selectively predetermined control parameters are assigned to a specific type of carriageway.

3. Motor vehicle according to Claim 2,
**characterized**
**in that** the operating parameter of the motor vehicle (1) is the actual speed.

## Revendications

1. Véhicule automobile comprenant un ou plusieurs dispositifs d'éclairage pour l'éclairage intérieur et un appareil de commande les commandant, ainsi qu'un système de navigation pour détecter des données de route actuelles et/ou prédictives, l'appareil de commande (3) communiquant avec le système de navigation (4) et étant réalisé pour commander le ou plusieurs dispositifs d'éclairage (2a, .., 2e) en fonction de données de route actuelles et/ou prédictives transmises par le système de navigation (4),
**caractérisé en ce que**
le système de navigation (4) ou l'appareil de commande (3) est réalisé pour vérifier de manière qualitative les données de route actuelles et/ou prédictives et lors de la détection de données de route de qualité insuffisante, un ou plusieurs dispositifs d'éclairage (2a, .., 2e) peuvent être commandés par le biais de l'appareil de commande (3) en fonction de paramètres de commande prédéfinis fixement ou sélectionnables en fonction d'un paramètre de fonctionnement du véhicule automobile (1).

2. Véhicule automobile selon la revendication 1,
**caractérisé en ce que**
les paramètres de commande prédéterminés prédéfinis fixement ou sélectionnables sont associés à un type de route particulier.

3. Véhicule automobile selon la revendication 2,
**caractérisé en ce que**
le paramètre de fonctionnement du véhicule automobile (1) est la vitesse actuelle.
